# EUROPÄISCHE PATENTSCHRIFT

(11) **EP 0 740 750 B1**
(45) Veröffentlichungstag und Bekanntmachung des Hinweises auf die Patenterteilung: **26.05.1999**
(21) Anmeldenummer: 95940194.4
(22) Anmeldetag: 17.11.1995
(51) Int. Cl.: F16J 1/16

(54) **Leichtmetallkolben für Brennkraftmaschinen**
Light-metal piston for internal combustion engines
Piston en alliage léger pour moteurs à combustion interne

(30) Priorität: 22.11.1994 DE 4441452
(43) Veröffentlichungstag der Anmeldung: 06.11.1996
(73) Patentinhaber: KOLBENSCHMIDT Aktiengesellschaft, D-74172 Neckarsulm (DE)
(72) Erfinder: OTTLICZKY, Emmerich, D-74670 Ernsbach (DE); DIERUFF, Thomas, D-74927 Eschelbronn (DE); STELLINO, Biagio, D-74172 Obereisesheim (DE)
(74) Vertreter: Dreiss, Uwe, Prof. Dr. jur. Dipl.-Ing. M.Sc.
(86) Internationale Anmeldenummer: EP9504526
(87) Internationale Veröffentlichungsnummer: WO9616284

(56) Entgegenhaltungen:
- EP-A- 0 065 642
- DE-A- 4 327 772
- DE-C- 3 211 472
- DE-C- 3 609 019
- FR-A- 2 126 711

## Beschreibung

Die Erfindung betrifft einen Leichtmetallkolben für Brennkraftmaschinen, vorzugsweise mit einer Kompressionshöhe von < 70 % des Kolbendurchmessers.

Unter den mechanischen Belastungen durch den Zünddruck wird der Boden von Leichtmetallkolben für Brennkraftmaschinen im Motorbetrieb derart verformt, daß sich dieser über den Bolzennaben belastungsbedingt wie ein Balken mit kleiner Abstützbreite im Bereich der Balkenmitte nach oben wölbt, wobei ebenso eine Verwölbung der Ringnuten erfolgt. Durch eine verformungssteife Gestaltung des Leichtmetallkolbens läßt sich dessen Deformation zwar in beherrschbaren Grenzen halten. Zur kraftflußgerechten Abstützung des Kolbenbodens existieren verschiedene Nabenformen, die unter bestimmten Randbedingungen jeweils gewichtsoptimale Lösungen darstellen. Für eine hohe Zünddruckbelastung wird beispielsweise die Blockabstützung der Naben vorgesehen, bei der die auf der Innenseite geraden Naben ohne Hinterschneidungen in den Kolbenboden übergehen. Die Trapezabstützung ist eine für sehr hoch belastete, vorzugsweise Dieselkolben eingesetzte Variante der Blockabstützung, bei der die Naben auf der Innenseite unter einem Winkel von 8 bis 15° angeschrägt sind und ein entsprechend abgeschrägtes Pleuel eingesetzt wird. Durch teilweise Überdeckung der Lagerflächen setzt die Trapezabstützung die Biegebeanspruchung des Kolbenbodens und des Kolbenbolzens herab und erlaubt somit eine bis zu 15 % höhere Belastbarkeit. Selbst bei einer auf hohe Belastung ausgelegten Abstützung der Naben, d.h. der Zone zwischen dem oberen Scheitel der Bohrungen in den Naben und dem Kolbenboden, führt ein maximaler Zünddruck von 150 bis 170 bar zu einer Belastung an den unter Zünddruck maximal belasteten Stellen des Randes der Brennraummulde in Bolzenachsrichtung und senkrecht dazu, die über der Grenze der Belastung von etwa 30 N/mm² für einen gegossenen Leichtmetallkolben mit konventioneller Konstruktion der Naben liegt. Darüber hinaus führt eine konische Aufweitung des pleuelseitigen Teils der Bohrungen in den Naben oder ein Einzug am Kolben in der vertikalen Ebene der pleuelseitigen Enden der Naben oder die Anordnung seitlicher Aussparungen, sogenannter Öltaschen, in den Lagerflächen der Bohrungen in den Naben zu einem Spannungsanstieg an den unter Druck maximalen Belastungen ausgesetzten Stellen des Randes der Brennraummulde.

Um am Rand der Brennraummulde diese Spannungen möglichst niedrig zu halten und einen Spannungsausgleich im Bereich der Ringnuten zu erzeugen, ist aus der EP-B-0 387 931 ein Leichtmetallkolben mit im Kolbenboden angeordneter Brennraummulde und mit im Kolbenschaft integrierten Bolzennaben in Block- oder Trapezabstützung bekannt, bei dem in den Bereichen zwischen der Ringnut für den untersten Verdichtungsring und dem oberen Scheitel der Bohrungen in den Naben mindestens je ein vom Mantel des Kolbenschafts nach innen verlaufendes, sich beidseitig der die Kolbenachse und die Bolzenachsrichtung einschließenden Ebene erstreckendes Sackloch vorgesehen ist, das einen Durchmesser von 10 bis 150 % des Durchmessers der Bohrungen in den Naben aufweist. Bei Kolben mit kleiner Kompressionshöhe, vorzugsweise von < 70 % des Kolbendurchmessers, ist jedoch der Abstand zwischen der Ringnute für den untersten Verdichtungsring und dem oberen Scheitel der Bohrungen in den Naben zu klein, um dort Sacklöcher anbringen zu können.

Der Erfindung liegt die Aufgabe zugrunde, den eingangs beschriebenen Leichtmetallkolben so zu gestalten, daß ein deutlicher Spannungsabbau am Kolbenboden erzielt wird.

Die Lösung dieser Aufgabe besteht darin, daß in den Bohrungen der Naben beidseitig des oberen Nabenscheitels in Richtung der Bolzenachsen verlaufende Ausnehmungen vorgesehen sind, die in Umfangsrichtung einen Winkel von > 30 bis 160°, vorzugsweise 60 bis 120°, einschließen und sich von der Nute für die Kolbenbolzensicherung zum Kolbeninneren hin über eine Länge von 10 bis 80 %, vorzugsweise 20 bis 50 %, der Auflagelänge des Kolbenbolzens in den Naben erstrecken.

Im Rahmen der Ausgestaltung der Erfindung beträgt die radiale Tiefe der Ausnehmungen 0,01 bis 10 mm, vorzugsweise 0,1 bis 5 mm.

Die Ausnehmungen sind spanlos durch Gießen, Rollieren oder dergleichen sowie durch spanende Bearbeitung herstellbar.

Die Erfindung ist in der Zeichnung beispielhaft dargestellt und wird nachfolgend näher erläutert.

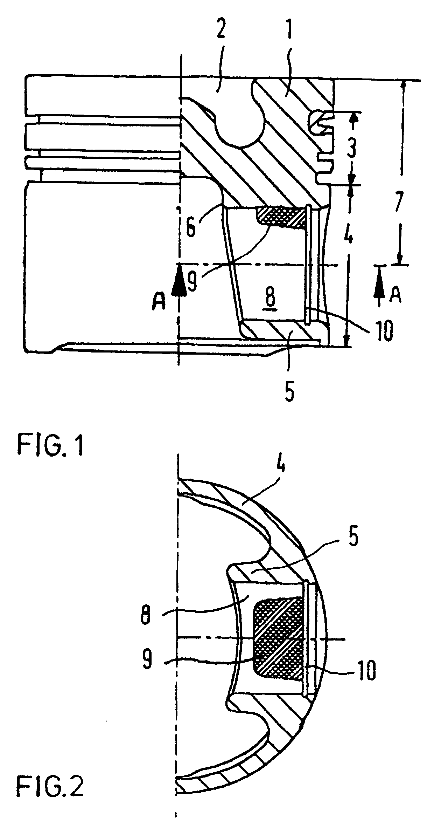

Der aus einer Aluminiumkolbenlegierung des Typs AlSil2CuNiMg gegossene Kolben, von dem Fig. 1 einen Längsschnitt in der die Kolbenachse und die Achse der Nabenbohrungen einschließenden Ebene und Fig. 2 einen Querschnitt entlang der Schnittlinie A-A der Fig. 1 zeigen, besteht aus dem den Kolbenboden (1) mit der Brennraummulde (2) und dem Ringfeld (3) umfassenden Kolbenkopf und dem Kolbenschaft (4) mit integrierten Naben (5) mit Trapezabstützung (6) mit einer Kompressionshöhe (7) von 55 % des Kolbendurchmessers. In den Bohrungen (8) der Naben (5) ist beidseitig von deren oberer Scheitellinie jeweils eine Ausnehmung (9) angebracht, die sich von der Nute (10) für die Kolbenbolzensicherung zum Inneren des Kolbens hin über eine Länge von 70 % der Auflagelänge des Kolbenbolzens in den Naben (5) erstreckt. In Umfangsrichtung der Bohrungen (8) in den Naben (5) schließt die Ausnehmung (9) einen Winkel von 120° ein.

In der nachfolgenden Tabelle sind die Ergebnisse von Spannungsmessungen am Rand der Brennraummulde im Bereich parallel und senkrecht zur Achse der Bohrungen in den Naben an einem herkömmlich ausgebildeten Leichtmetallkolben (I) mit Brennraummulde und an einem erfindungsgemäß gestalteten, vorstehend näher beschriebenen Leichtmetallkolben (II) wiedergegeben.

| Lage der DMS-Meßstellen | Leichtmetallkolben (I) | Leichtmetallkolben (II) | Unterschied (%) |
|---|---|---|---|
| // Nabenbohrungsachse Zugspannungen (N/mm²) | + 43,97 | + 37,94 | 13,7 |
| | | | |
| ∠ Nabenbohrungsachse Druckspannungen (N/mm²) | - 33,71 | - 25,84 | 23,4 |

Die vergleichende Gegenüberstellung der Meßergebnisse zeigt eindeutig, daß mit dem erfindungsgemäß gestalteten Leichtmetallkolben (II) die durch den Zünddruck am Brennraummuldenrand verursachten Zug- und Druckspannungen, verglichen mit einem herkömmlich aufgebauten Leichtmetallkolben (I), gesenkt werden können.

Die Ausnehmungen bewirken eine Umlenkung des durch die Einwirkung der Gaskraft auf den Kolbenboden erzeugten Kraftflusses. Im äußeren Nabenabschnitt wird der Kraftfluß in der Mitte unterbrochen und in die Breite gelenkt, so daß sich die Momente zwischen Krafteinleitung am Kolbenboden und Kraftaufnahme durch den Kolbenbolzen reduzieren. Diese Verbreiterung des Kraftflusses mit reduzierten Momenten führt zur Umkehrung mit reduzierten Spannungen. Durch den unterbrochenen Kontakt am Kolbenbolzenende wird der Kraftfluß auf den inneren Nabenabschnitt konzentriert. Durch die Reduzierung der Momente senkrecht zur Achse des Kolbenbolzens wird primär die Druckspannung am Kolbenboden verringert. Mit zunehmender Länge der Ausnehmung in den Naben wird gleichzeitig das Kraftfeld, das eine Umlenkung in die Breite verursacht, verstärkt. Durch die Ausnehmungen werden die Schmierverhältnisse verbessert.

## Patentansprüche

1. Leichtmetallkolben für Brennkraftmaschinen, vorzugsweise mit einer Kompressionshöhe von < 70 % des Kolbendurchmessers, dadurch gekennzeichnet, daß in den Bohrungen (8) der Naben (5) beidseitig des oberen Nabenscheitels jeweils in Richtung der Achse der Bohrungen verlaufende Ausnehmungen (9) angebracht sind, die in Umfangsrichtung einen Winkel von > 30 bis 160° einschließen und sich von der Nute (10) für die Kolbenbolzensicherung zum Kolbeninneren hin über eine Länge von 10 bis 80 % der Auflagelänge des Kolbenbolzens erstrecken.

2. Leichtmetallkolben nach Anspruch 1, dadurch gekennzeichnet, daß die Ausnehmungen (9) in Umfangsrichtung der Bohrung (8) in der Nabe (5) einen Winkel von 60 bis 120° einschließen.

3. Leichtmetallkolben nach einem der Ansprüche 1 und 2, dadurch gekennzeichnet, daß sich die Ausnehmungen (9) über eine Länge von 20 bis 50 % der Auflagelänge des Kolbenbolzens erstrecken.

4. Leichtmetallkolben nach einem der Ansprüche 1 bis 3, dadurch gekennzeichnet, daß die Ausnehmungen (9) eine radiale Tiefe von 0,01 bis 10 mm, vorzugsweise 0,1 bis 5 mm, aufweisen.

## Claims

1. Light-alloy piston for internal combustion engines, preferably with a compression height of < 70% of the piston diameter, characterized in that recesses (9) are made in the bores (8) of the bosses (5) on both sides of the upper apex of the bosses, the recesses in each case running in the direction of the axis of the bores, including an angle of > 30 to 160° in the circumferential direction and extending from the groove (10) for the piston-pin retainer towards the piston interior over a length of 10 to 80% of the piston-pin bearing length.

2. Light-alloy piston according to Claim 1, characterized in that the recesses (9) include an angle of 60 to 120° in the circumferential direction of the bore (8) in the boss (5).

3. Light-alloy piston according to one of Claims 1 and 2, characterized in that the recesses (9) extend over a length of 20 to 50% of the piston-pin bearing length.

4. Light-alloy piston according to one of Claims 1 to 3, characterized in that the recesses (9) have a radial depth of 0.01 to 10 mm, preferably 0.1 to 5 mm.

## Revendications

1. Piston en alliage léger pour moteurs à combustion interne, de préférence avec une hauteur de compression inférieure à 70% du diamètre du piston, caractérisé en ce que des évidements (9) sont ménagés dans les alésages (8) des bossages d'axe (5) de part et d'autre du sommet supérieur desdits bossages, dans la direction de l'axe des alésages, lesdits évidements formant, dans la direction circonférencielle, un angle compris entre 30 et 160° et s'étendant depuis la rainure (10) recevant la fixation de l'axe du piston jusqu'à l'intérieur du piston sur une longueur de 10 à 80% de la longueur d'appui de l'axe de piston.

2. Piston en alliage léger selon la revendication 1, caractérisé en ce que les évidements (9) sont formés sur un angle compris entre 60 et 120° dans la direction circonférencielle de l'alésage (8) du bossage (5).

3. Piston en alliage léger selon l'une quelconque des revendications 1 et 2, caractérisé en ce que les évidements (9) s'étendent sur une longueur comprise entre 20 et 50% de la longueur d'appui de l'axe de piston.

4. Piston en alliage léger selon l'une quelconque des revendications 1 à 3, caractérisé en ce que les évidements (9) ont une profondeur radiale comprise entre 0,01 et 10 mm, de préférence entre 0,1 et 5 mm.
